# EUROPEAN PATENT SPECIFICATION

(11) **EP 2 899 667 B1**
(45) Date of publication and mention of the grant of the patent: **11.03.2020**
(21) Application number: 14305095.3
(22) Date of filing: 23.01.2014
(51) Int. Cl.: G06F 21/82

(54) **System for controlling access to peripheral devices**
System zur Kontrolle des Zugriffs auf Peripheriegeräte
Système pour contrôler l'accès aux périphériques

(43) Date of publication of application: 29.07.2015
(73) Proprietor: Alcatel Lucent, 91620 Nozay (FR)
(72) Inventor: Olivier, François, 67400 Illkirch (FR); Nogueira, Georges, 67400 Illkirch (FR)
(74) Representative: Novagraaf Technologies

(56) References cited:
- EP-A2- 2 629 234
- WO-A1-2009/142689
- US-A1- 2013 304 641
- Amiya Samanta: "Disable access to Webcam and microphone in Chrome, Firefox, IE", http://www.tiploot.com/, 1 August 2013 (2013-08-01), XP055109314, Retrieved from the Internet: URL:http://www.tiploot.com/disable-access- to-webcam-and-microphone-in-chrome-firefox -ie/ [retrieved on 2014-03-21]
- TAKAHIRO SHINAGAWA ET AL: "BitVisor: A Thin Hypervisor for Enforcing I/O Device Security", VEE'09: PROCEEDINGS OF THE 2009 ACM SIGPLAN/SIGOPS INTERNATIONAL CONFERENCE ON VIRTUAL EXECUTION ENVIRONMENTS; WASHINGTON, DC, USA; MARCH 11 - 13, 2009, ACM PRESS, US, 11 March 2009 (2009-03-11), pages 121-130, XP007911489, ISBN: 978-1-60558-375-4
- Michael Backes ET AL: "AppGuard - fine-grained policy enforcement for untrusted android applications", , 28 February 2013 (2013-02-28), XP055457837, Retrieved from the Internet: URL:https://publikationen.sulb.uni-saarlan d.de/bitstream/20.500.11880/26548/1/AppGua rd_Fine_grained.pdf [retrieved on 2018-03-08]

## Description

### FIELD OF THE INVENTION

An aspect of the invention relates to a system for controlling access to peripheral devices of a software-controlled product. The software-controlled product may be in the form of, for example, a personal computer, a tablet, or a so-called smart phone. The peripheral devices that are subject to access control may be in the form of, for example, microphones, webcams, loudspeakers, as well as other types of multimedia peripheral devices.

### BACKGROUND OF THE INVENTION

There are many types of software-controlled products capable of interoperating with peripheral devices that interface with a physical environment surrounding the software-controlled product. For example, personal computers, tablets, and smart phones are capable of interoperating with microphones, webcams, and loudspeakers. Such physical-world interfacing peripheral devices are capable of converting data into a physical output, or capable of converting a physical input into data, or both.

In parallel, there are numerous dedicated software programs, commonly referred to as applications, which are capable of accessing physical-world interfacing peripheral devices. The term "accessing" is used here in the sense of causing a peripheral device to carry out one or more particular operations. An application that accesses a physical-world interfacing peripheral device can thus obtain information from the physical environment, or present information to the physical environment. This is generally the case with applications that offer multimedia communication capabilities, such as, for example, softphone, audio/video conferencing, audio/video recording.

In this context, there is a risk of a peripheral device being improperly accessed, or even misused, by an application that is running. An application may access a peripheral device without requiring user consent and, what is more, without a user having knowledge that the application is accessing the peripheral device concerned. This can even pose security risks. Malicious software programs or malicious websites may unnoticeably, that is, secretly, access a peripheral device. By doing so, a malicious software program, or a malicious website, may collect private information through a peripheral device.

In an enterprise environment, a malicious software entity may collect sensitive, confidential information by secretly accessing a peripheral device. This problem is exacerbated by the fact that a software-controlled product may be used for personal purposes as well as for professional purposes. Numerous enterprises have a policy of "Bring/Buy Your Own Device" (BYOD) with regard to personal computers, tablets, and smart phones, and like software-controlled products.

There are some solutions for controlling access to peripheral devices. For example, an operating system may comprise a so-called "Device Manager", which is a module that allows a user to activate or deactivate a selected peripheral device. An operating system may also offer a possibility of collectively enabling or disabling peripheral devices of a particular type, such as, for example, microphones. There may be a scheme that prompts a user to give an authorization when an application tries to access a peripheral device for the first time. The user's response is then stored and will be applied a next time that the application seeks to access the peripheral device.

A web browser and, in particular, a multimedia module associated therewith may allow some user control over access to a peripheral device. For example, a user may configure the multimedia module with respect to access to a particular peripheral device, such as a webcam or a microphone, The user may select between several option: "authorize", "deny", "ask user", or "authorize with a URL list", URL being an acronym for "Uniform Resource Locator".

### SUMMARY OF THE INVENTION

There is a need for a solution that allows efficient access control of peripheral devices.

In order to better address this need, in accordance with an aspect of the invention, there is provided a system for controlling access to peripheral devices of a software-controlled product, the system comprising:
- a peripheral device access control module adapted to intercept a command for a peripheral device issued by an application that is running on the software-controlled product;
- a peripheral device access management module adapted to examine a command that the peripheral device access control module has intercepted so as to determine whether the application that has issued the command is authorized to present this command to the peripheral device, or not,
- the peripheral device access control module being adapted to enable presentation of the command to the peripheral device, or to block presentation of the command to the peripheral device, depending on whether the peripheral device access management module has made a positive determination or a negative determination, respectively.

Another aspect of the invention concerns a software-controlled product comprising a system as defined hereinbefore.

Yet another aspect of the invention concerns a method of controlling access to peripheral devices of a software-controlled product, the method comprising:
- a command interception step in which a peripheral device access control module intercepts a command for a peripheral device issued by an application that is running on the software-controlled product;
- a command examination step in which a peripheral device access management module examines the command that the peripheral device access control module has intercepted so as to determine whether the application that has issued the command is authorized to present this command to the peripheral device, or not,
   - an access control implementation step in which the peripheral device access control module enables presentation of the command to the peripheral device, or blocks presentation of the command to the peripheral device, depending on whether the peripheral device access management module has made a positive determination or a negative determination, respectively

Yet another aspect of the invention concerns a device readable medium comprising a set of instructions that enables a processor, which is capable of executing the set of instructions, to carry out the method defined hereinbefore.

In each of these aspects, there is a centralized, overall control of access to peripheral devices, which can apply to all applications that are installed on the software-controlled product. In case a new application is installed, this new application will also be subject to this overall access control. There can thus be a comprehensive access control that may prevent any application from accessing a peripheral device without an explicit authorization. A user can thus define an overall access policy, which the system will apply. Moreover, it is also possible for a network administrator to define a network-wide overall access policy that applies, at least by default, to software-controlled products that form part of the network.

An embodiment of the invention advantageously comprises one or more of the following additional features, which are described in separate paragraphs. These additional features each contribute to efficient access control of peripheral devices.

The peripheral access control module may be embedded in an operating system of the software-controlled product.

The peripheral access control module may be arranged between an operating system of the software-controlled product and at least one peripheral device.

The peripheral access control module may submit examination data to the peripheral device access management module following an interception of a command for a peripheral device. The examination data may include at least one of the following information items: the application that has issued the command, the peripheral device for which the command is intended, at least one parameter of the command, and an application that effectively seeks to use the peripheral device as at least one of the following: a source of data and a destination of data.

The peripheral device access management module may communicate with a plug-in module embedded in an application adapted to issue a command for the peripheral device, so as to obtain contextual information associated with the command for the peripheral device.

The contextual information may comprise an address indication of a resource that the application has accessed.

The address indication may comprise at least one of the following information items: a URL, URL being an acronym for Uniform Resource Locator, an IP address, a network identifier, a domain identification, and a resource directory identification. These features particularly apply to network connected applications.

The peripheral device access management module may comprise a configuration interface adapted to receive a set of rules according to which a command for a peripheral device should be examined.

The configuration interface may be adapted to receive the set of rules from an administrator of a system comprising a plurality of software-controlled products.

The peripheral device access management module may comprise an information-delivery interface adapted to provide information on access authorization determinations that the peripheral device access management module has made.

For the purpose of illustration, a detailed description of some embodiments of the invention is presented with reference to accompanying drawings.

### BRIEF DESCRIPTION OF THE DRAWINGS

FIG. 1 is a block diagram schematically representing a software-controlled product with various peripheral devices.
FIG. 2 is a functional diagram schematically representing an operational mode of the software-controlled product.
FIG. 3 is a flow chart diagram schematically representing a method of controlling access to peripheral devices.
FIG. 4 is a functional diagram schematically representing an alternative operational mode of a software-controlled product.
FIG. 5 is a pictorial diagram schematically representing an access control window that can be displayed to a user.

### DETAILED DESCRIPTION

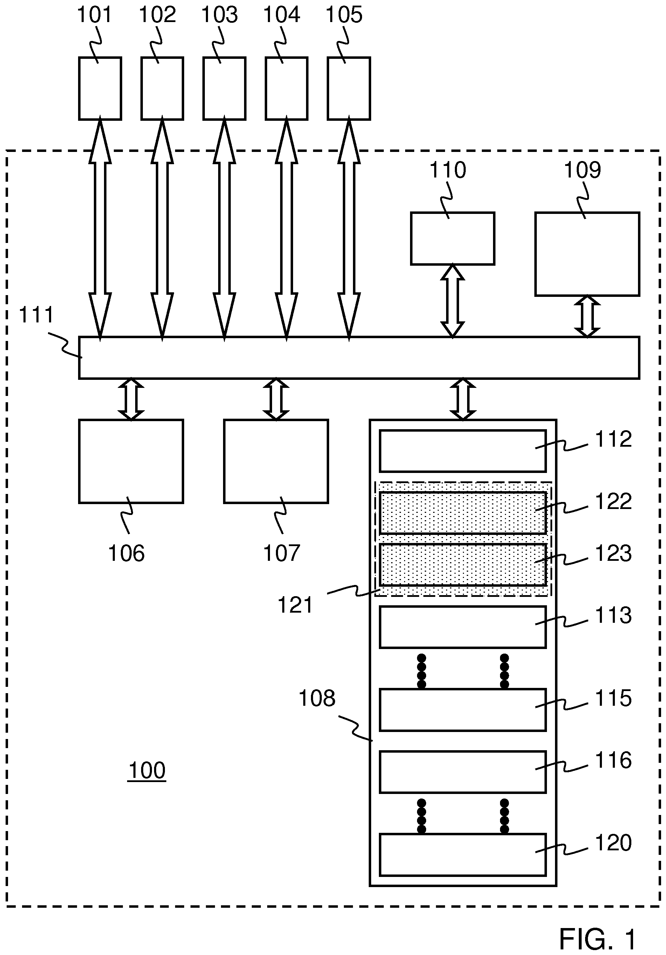

FIG. 1 schematically illustrates a software-controlled product 100 with various peripheral devices 101-105, which are represented as a block diagram. The software-controlled product 100 may be in the form of, for example, a personal computer, a tablet, or a so-called smart phone. A peripheral device may be in the form of, for example, a microphone, a webcam, or a loudspeaker, as well as any other type of multimedia peripheral device. A peripheral device may be a separate unit that is coupled to the software-controlled product 100. However, a peripheral device may equally be an integral part of the software-controlled product 100. That is, a peripheral device may be external or internal.

The software-controlled product 100 comprises various types of circuits: a processor 106, a volatile memory 107, a non-volatile memory 108, a set of user interfaces 109, a set of communication interfaces 110, and a bus system 111. The non-volatile memory 108 comprises various software programs: an operating system 112, various applications 113-115, and various peripheral device drivers 116-120. A software program is a set of instructions that the processor 106 may execute. The processor 106 then carries out various operations, which are defined by the software program.

The operating system 112 defines basic and general operations, which enable a user to interact with the software-controlled product 100. The operating system 112 can further enable applications to use circuits and other resources of the software-controlled product 100. An application defines specific operations, which enable a user to use the software-controlled product 100 for a particular purpose. For example, an application may be in the form of a web browser, which enables a user to interact with a website, or a webpage, on the Internet. A peripheral device driver defines specific operations, which enable an application, or another type of software program, to use a peripheral device.

The non-volatile memory 108 further comprises a multimedia firewall 121. This is a software program that comprises a peripheral device access control module 122 and a peripheral device access management module 123. The multimedia firewall 121 defines operations for controlling access to the peripheral devices 101-105. The term "access" is used here in the sense of causing a peripheral device to carry out one or more particular operations. For example, an application that accesses a microphone, which is a peripheral device, may cause the microphone to pick up environmental sound. The application may further cause the microphone to transfer data representing that sound to a destination entity, which need not necessarily be the application itself.

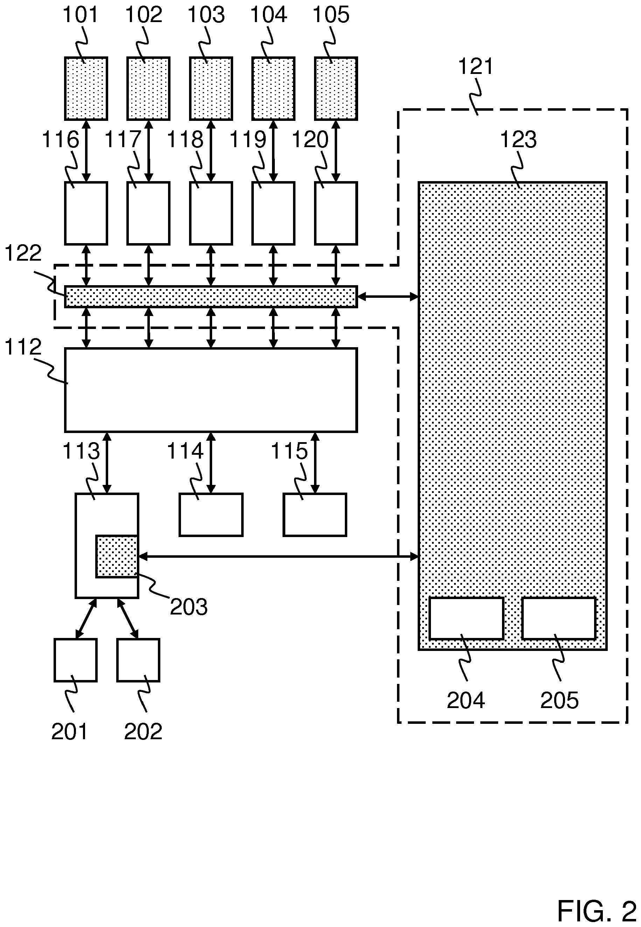

FIG. 2 schematically illustrates an operational mode of the software-controlled product 100, which is represented as a functional diagram. FIG. 2 illustrates that various applications 113-115 are running, that is, being executed, under control of the operating system 112. One of these applications 113 is a web browser and will therefore be referred to as web browser 113 hereinafter for reasons of convenience. Two web applications 201, 202 are running under control of the web browser 113. A web application can be a software program that is present on a website with which the user interacts. A web application can be regarded as a resource that the web browser 113 has accessed. The web browser 113 comprises a so-called plug-in module 203, which can provide information on operations that the web browser 113 carries out, as well as operations that the web applications 201, 202 carry out. This will be described in greater detail hereinafter.

FIG. 2 further illustrates that various peripheral device drivers 116-120 are running, which are associated with various peripheral devices 101-105, respectively. For example, peripheral device driver 116 is associated with peripheral device 101, which may be, for example, a microphone. Peripheral device driver 117 is associated with peripheral device 102, which may be, for example, a webcam. The peripheral device driver 118 is associated with peripheral device 103, which may be, for example, a loudspeaker. Peripheral devices 101, 102, 103 will be referred to hereinafter as microphone 101, webcam 102, and loudspeaker 103, respectively, by way of illustrative example. Similarly, peripheral device drivers 116, 117, 118 will be referred to hereinafter as microphone driver 116, webcam driver 117, and loudspeaker driver 118, respectively

FIG. 2 further illustrates the multimedia firewall 121 is running in the operational mode. The peripheral device access control module 122 is running as an interface between the operating system 112 and the various peripheral device drivers 116-120. The peripheral device access management module 123 is running in communication with the peripheral device access control module 122. That is, the peripheral device access management module 123 and the peripheral device access control module 122 may directly communicate with each other while running. The peripheral device access management module 123 may also directly communicate with the plug-in module 203 of the web browser 113. The peripheral device access management module 123 provides a configuration interface 204 while running, as well as an information-delivery interface 205.

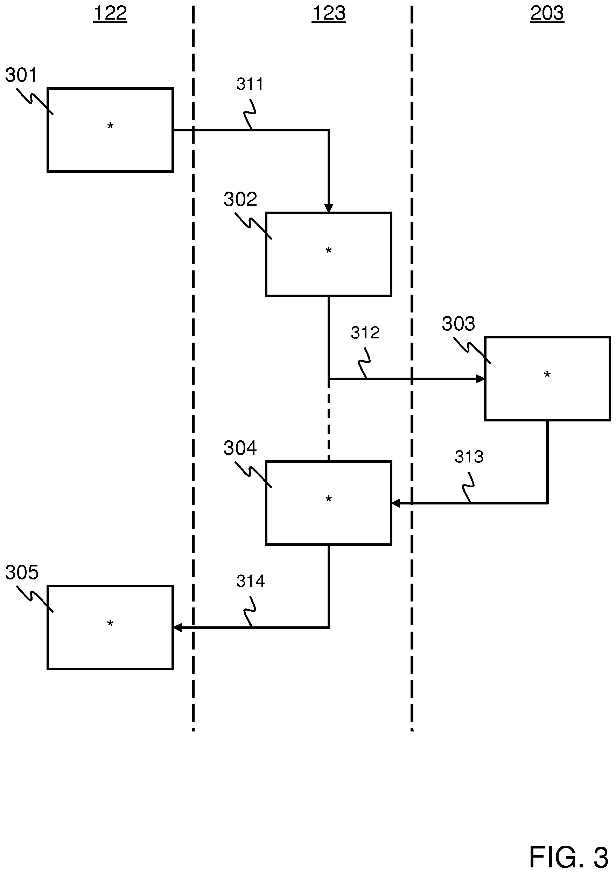

FIG. 3 schematically illustrates a method of controlling access to peripheral devices. The method comprises a series of steps 301-305, which involve the peripheral device access control module 122, the peripheral device access management module 123, and the plug-in module 203 of the web browser 113. FIG. 3 is therefore vertically divided into several columns. A left column illustrates various steps that peripheral device access control module 122 carries out. A middle column illustrates various steps that the peripheral device access management module 123 carries out. A right column illustrates various steps that the plug-in module 203 of the web browser 113 carries out. The left column and the middle column can be regarded as a flowchart representation of the multimedia firewall 121. The multimedia firewall 121 is, in fact, a computer program that enables the software-controlled product 100 to carry out various operations, which are described hereinafter with reference to FIG. 3.

The method illustrated in FIG. 3 provides an exemplary explanation on the multimedia firewall 121 controlling access to the peripheral devices 101-105 illustrated in FIGS. 1 and 2. The access control may apply to any software program seeking to access any peripheral device. In the present exemplary explanation, it is assumed that web browser 113 issues a command for the microphone 101. For example, the command may be "microphone on". The web browser 113 may issue the command in response to a request from a web application 201 that runs under the control of the web browser 113. The command typically passes through the operating system 112, which operates as a supervisor and an intermediate between software programs that are running. The operating system 112 relays the command to the microphone driver 116, which is associated with the microphone 101 for which the command is intended.

In a command interception step 301, the peripheral device access control module 122 intercepts the command for the microphone 101 that the web browser 113 has issued, as relayed by the operating system 112. Following this interception, the peripheral device access control module 122 sends examination data 311 to the peripheral device access management module 123. The peripheral device access control module 122 then awaits an access authorization response 314 from the peripheral device access management module 123. In the meantime, the peripheral device access control module 122 prevents that the command in question is presented to the microphone driver 116, at least until the access authorization response 314 has arrived.

The examination data 311, which the peripheral device access control module 122 sends to the peripheral device access management module 123, may correspond with the command that has been intercepted. Alternatively, the examination data 311 may comprise one or more information items that the peripheral device access control module 122 may extract from the command. More specifically, the examination data 311 may include an information item indicating the application that has issued the command, which is the web browser 113 in this example. Another information item may indicate the peripheral device for which the command is intended, which is the microphone 101 in this example. Yet another information item may represent, for example, parameters of the command. Yet another information item may indicate an application that effectively seeks to use the peripheral device as a source of data, or a destination of data, or both. In this example, this application could be a web application that is running under the control of the browser.

In an examination data reception step 302, the peripheral device access management module 123 receives the examination data 311 from peripheral device access control module 122 following the interception of the command. The examination data 311 allows the peripheral device access management module 123 to examine the command that the peripheral device access control module 122 has intercepted. However, this examination may require further data, which need not be comprised in the examination data 311 received from the peripheral device access management module 123.

The peripheral device access management module 123 may obtain further examination data 311 from the plug-in module 203, which is embedded in the web browser 113. For example, the peripheral device access management module 123 may send a request to the plug-in module 203 so as to obtain contextual information associated with the command for the microphone 101. FIG. 3 illustrates that the peripheral device access management module 123 sends such a request 312 to the plug-in module 203.

In a contextual information provision step 303, the plug-in module 203 responds to the request 312 from the peripheral device access management module 123 by providing contextual information 313 concerning the command that has been intercepted. The contextual information 313 may comprise, for example, an address indication of a resource that the web browser 113 has accessed. This resource may be the web application that seeks to use the microphone 101. The address indication may comprise a URL, URL being an acronym for Uniform Resource Locator. The address indication may comprise an IP address, IP being an acronym for Internet Protocol, a network identifier, a domain identification, or a directory identification, or any combination of these information items.

In a command examination step 304, the peripheral device access management module 123 examines, in effect, the command that has been intercepted. This command examination is based on the examination data 311 received from the peripheral device access control module 122. The command examination may further be based on the contextual information 313 received from the plug-in module 203 embedded in the web browser 113. In this example, the command examination may thus also take into consideration the application that effectively seeks to use the microphone 101, which is the web application in this example.

In examining the command, the peripheral device access management module 123 determines whether the application that has issued the command, which is the web browser 113 in this example, is authorized to present this command to the peripheral device concerned, which is the microphone 101 in this example, or not. The peripheral device access management module 123 thus makes an access authorization determination with respect to the command that has been intercepted. This access authorization determination can be positive, which implies that the command can be presented to the peripheral device, or can be negative, which implies that the command should be blocked. The access authorization response 314, which the peripheral device access management module 123 sends to the peripheral device access control module 122, can thus be positive or negative, depending on whether the access authorization determination has been positive or negative, respectively.

The peripheral device access management module 123 may make the access authorization determination on the basis of a set of rules that have been received though the configuration interface 204 illustrated in FIG. 2. For example, the set of rules may indicate one or more applications that are allowed to access the microphone 101, as well as one or more applications that are not allowed to access this peripheral device. In case an application is allowed to access the microphone 101, this allowance may be subject to one or more conditions. For example, an application may be allowed to submit one or more specific commands to the microphone 101, whereas the application should not be allowed to submit one or more other specific commands to the microphone 101.

A condition on whether an application may access the microphone 101 can also relate to the contextual information 313 mentioned hereinbefore. For example, the set of rules may define that the web browser 113 may not access the microphone 101 if a command originates from a web application of one or more specific websites. Conversely, the set of rules may define that the web browser 113 may access the microphone 101 only if a command originates from a web application of one or more specific websites. Other websites will be subject to access refusal. The set of rules may further indicate one or more commands that are allowed in such a particular context, or one or more commands that should be blocked in such a context, or both.

The peripheral device access management module 123 may also involve the user in making an access authorization determination. The set of rules may specify that the user should be asked to provide an authorization, or a denial, in case a particular application seeks to access a particular peripheral device. Such an "ask user" rule may also apply to a particular command, or a particular set of commands, that a particular application has issued for a particular peripheral device. In case such a rule applies, the user can decide whether the authorization access response should be positive or negative. A positive or negative authorization access response from the user can then be definitive, temporary, or apply to this case only.

In an access control implementation step 305, the peripheral device access control module 122 receives the access authorization response 314 from the peripheral device access management module 123. This response can be positive or negative. In case the access authorization response 314 is positive, the peripheral device access control module 122 allows the command that has been intercepted to be presented to the microphone driver 116. The web browser 113 and, more particularly, the web application that runs under the control of the web browser 113, can then cause the microphone 101 to carry out an operation as specified in the command. Conversely, in case the access authorization response 314 is negative, the peripheral device access control module 122 will prevent the command from being presented to the microphone driver 116. For example, the command may then simply be deleted.

The information-delivery interface 205 may provide the user with information on access authorization determinations that the peripheral device management control module has made. For example, this information may generally indicate that a particular application has tempted to access a particular peripheral device, but has been refused this access. This information may further indicate, in more detail, one or more commands that this application has issued, in vain, in attempting to access the peripheral device concerned. The information-delivery interface 205 may provide this information regarding any application, such as, for example, the web browser 113, and any peripheral device, such as, for example, the microphone 101. The user may use this information to modify the set of rules, if so desired.

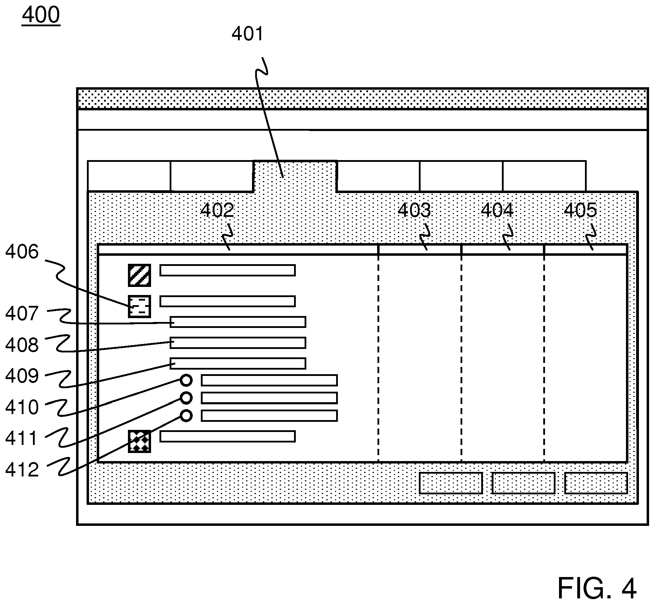

FIG. 4 schematically illustrates an access control window 400 that the configuration interface 204 can display to a user. The access control window 400 allows the user to define the set of rules that is used for access authorization determinations, or to modify this set of rules, or both. The access control window 400 may comprise various tabs, including a tab 401 for defining so-called blocked hosts. This blocked hosts tab 401 comprises a presentation window with four columns 402-405. A left column 402, which may be entitled "source", may indicate applications for which access rules may be defined. A middle left column 403 may indicate a reason for a denial or an authorization of access. A middle right column 404 may indicate a time span within which an access rules applies. A right column 405 may indicate a remaining time during which an access rule will continue to apply.

In more detail, the left column 402 of the presentation window may comprise a list of applications. In this list, an application may be represented by an icon and a text string identifying the application by its name. For example, the list may include such a representation 406 for the web browser 113 mentioned hereinbefore. In FIG. 4, a list of peripheral devices is presented below the representation 406 of the web browser 113. These are the peripheral devices that the web browser 113 may potentially access. A peripheral device may be identified by, for example, a text string. For example, in the list, a first text string 407 may identify the microphone 101; a second text string 408 may identify the webcam 102; and a third text string 409 may identify the loudspeaker 103. The display of this list of peripheral devices may result from a so-called click on a "+" icon that can be displayed in association with the representation of the web browser 113.

FIG. 4 illustrates an example in which a list of access rules 410-412 is displayed below the third text string 409, which identifies the loudspeaker 103. These access rules apply when the web browser 113 seeks to access the loudspeaker 103. These access rules 410-412 are used in access authorization determinations for commands that the web browser 113 issues for the loudspeaker 103. An access rule applies to a particular web resource and defines whether the web resource is authorized to access the loudspeaker 103, or is denied access to the loudspeaker 103. That is, the access rule may be an access authorization, or an access denial. The web resource may be identified by, for example, its URL, its IP address, or a domain name.

For example, a first access rule 410 may define that the loudspeaker 103 is blocked for a web resource having the IP address "12.345.678.912". A second access rule 411 may define that the loudspeaker 103 is blocked for a web resource on a domain that is "abc.com". A third access rule 412 may define that the loudspeaker 103 is authorized for a web resource having a URL that comprises "http://www.xyz.com". These access rules apply to the web browser 113, which is indicated in the list illustrated in FIG. 4 by means of its representation 406.

The software-controlled product 100 illustrated in FIG. 1 may form part of a system comprising one or more other software-controlled products, which may be interconnected through a network. An administrator of the system may then define a general set of rules that applies to the software-controlled product 100, as well as to other software-controlled products that form part of the system. The administrator may configure the peripheral device access management module 123 illustrated in FIG. 2 with this general set of rules through the network, if present, and through the configuration interface 204. This equally applies to other software-controlled products that comprise a multimedia firewall as described hereinbefore. Accordingly, a general policy for access to peripheral devices can be defined and implemented within, for example, an organization, or a particular department.

The configuration interface 204 may allow a user to modify the general set of rules so as to obtain a tailored set of rules for the software-controlled product 100. However, the configuration interface 204 may allow the administrator to block a user from modifying one or more particular rules, or even from modifying the general set of rules at all.

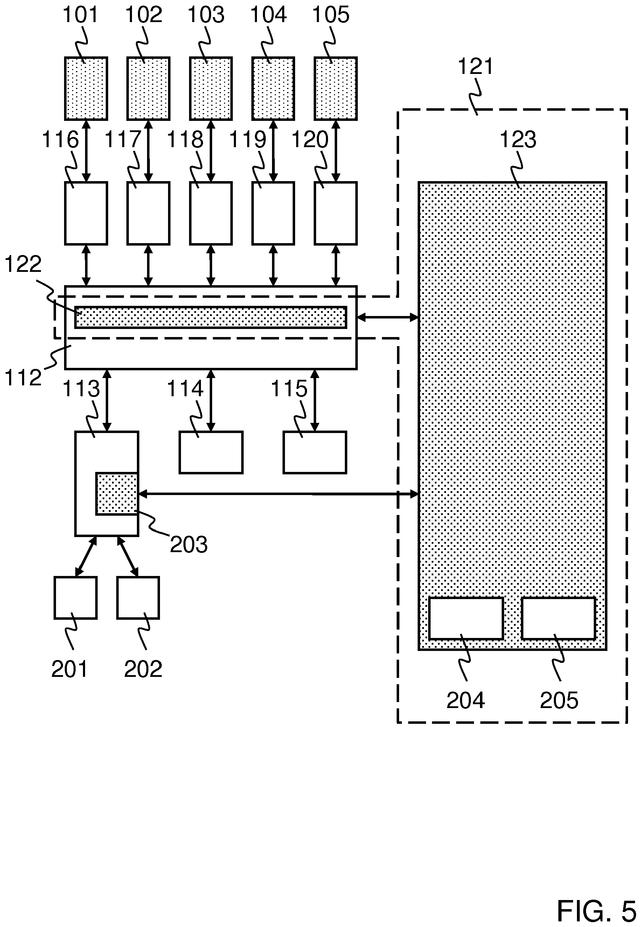

FIG. 5 schematically illustrates an alternative operational mode of a software-controlled product 100, which is slightly different from that illustrated in FIGS. 1 and 2. Here, the peripheral device access control module 122 is embedded in the operating system 112. This module can also be integrated with the operating system 112 using, for example, an application programming interface of the operating system 112. In any case, a method of controlling access peripheral devices similar to that described hereinbefore with reference to FIG. 3, can be used in the alternative operational mode illustrated in FIG. 4. The mere difference may be that the peripheral device access control module 122 already intercepts a command within the operating system 112.

### NOTES

The detailed description hereinbefore with reference to the drawings is merely an illustration of the invention and the additional features, which are defined in the claims. The invention can be implemented in numerous different ways. In order to illustrate this, some alternatives are briefly indicated.

The invention may be applied in numerous types of products or methods related to controlling access to peripheral devices. For example, the invention may be applied in any type of software-controlled product capable of executing a software program that can issue a command for a peripheral device.

The term "application" should be understood in a broad sense. The term may embrace any software program that can be executed by a processor.

In general, there are numerous different ways of implementing the invention, whereby different implementations may have different topologies. In any given topology, a single module may carry out several functions, or several modules may jointly carry out a single function. In this respect, the drawings are very diagrammatic.

There are numerous functions that may be implemented by means of hardware or software, or a combination of both. A description of a software-based implementation does not exclude a hardware-based implementation, and vice versa. Hybrid implementations, which comprise one or more dedicated circuits as well as one or more suitably programmed processors, are also possible. For example, various functions described hereinbefore with reference to the figures may be implemented by means of one or more dedicated circuits, whereby a particular circuit topology defines a particular function.

There are numerous ways of storing and distributing a set of instructions, that is, software, which allows controlling access to peripheral devices in accordance with the invention. For example, software may be stored in a suitable device readable medium, such as, for example, a magnetic disk, an optical disk, or a memory circuit. A device readable medium in which software is stored may be supplied as an individual product or together with another product, which may execute the software. Such a medium may also be part of a product that enables software to be executed. Software may also be distributed via communication networks, which may be wired, wireless, or hybrid. For example, software may be distributed via the Internet. Software may be made available for download by means of a server. Downloading may be subject to a payment.

The remarks made hereinbefore demonstrate that the detailed description with reference to the drawings is an illustration of the invention rather than a limitation. The invention can be implemented in numerous alternative ways that are within the scope of the appended claims. All changes that come within the meaning and range of equivalency of the claims are to be embraced within their scope. Any reference sign in a claim should not be construed as limiting the claim. The word "comprising" does not exclude the presence of other elements or steps than those listed in a claim. The word "a" or "an" preceding an element or step does not exclude the presence of a plurality of such elements or steps. The mere fact that respective dependent claims define respective additional features, does not exclude combinations of additional features other than those reflected in the claims.

## Claims

1. A system (121) for controlling access to peripheral devices (101-105) of a software-controlled product (100), the system comprising:
- a peripheral device access control module (122) adapted to intercept a command for a peripheral device (101) issued by an application (113) that is running on the software-controlled product;
- a peripheral device access management module (123) adapted to examine a command that the peripheral device access control module has intercepted so as to determine whether the application that has issued the command is authorized to present this command to the peripheral device, or not, so as to provide a centralized control of access to said peripheral devices for all applications (113) running on said software-controlled product,
- the peripheral device access control module being adapted to enable presentation of the command to the peripheral device, or to block presentation of the command to the peripheral device, depending on whether the peripheral device access management module has made a positive determination or a negative determination, respectively;
wherein the peripheral access control module (122) is adapted to submit examination data (311) to the peripheral device access management module (123) following an interception of a command for a peripheral device (101), the examination data including at least one of the following information items: the application (113) that has issued the command, the peripheral device (101) for which the command is intended, at least one parameter of the command, and an application (201) that effectively seeks to use the peripheral device as at least one of the following: a source of data and a destination of data;
wherein the peripheral device access management module (123) is arranged to communicate with a plug-in module (203) embedded in an application (113) adapted to issue a command for the peripheral device (101), so as to obtain contextual information (313) associated with the command for the peripheral device.

2. A system according to claim 1, wherein the peripheral access control module (122) is embedded in an operating system (112) of the software-controlled product (100).

3. A system according to claim 1, wherein the peripheral access control module (122) is arranged between an operating system (112) of the software-controlled product (100) and at least one peripheral device (101).

4. A system according to claim 1, wherein the contextual information (313) comprises an address indication of a resource (201) that the application (113) has accessed.

5. A system according to claim 4, wherein the address indication comprises at least one of the following information items: a URL, URL being an acronym for Uniform Resource Locator, an IP address, a network identifier, a domain identification, and a resource directory identification.

6. A system according to any of claims 1 to 5, wherein the peripheral device access management module (123) comprises a configuration interface (204) adapted to receive a set of rules according to which a command for a peripheral device (101) should be examined.

7. A system according to claim 6, wherein the configuration interface (204) is adapted to receive the set of rules from an administrator of a system comprising a plurality of software-controlled products.

8. A system according to any of claims 1 to 7, wherein the peripheral device access management module (123) comprises an information-delivery interface (205) adapted to provide information on access authorization determinations that the peripheral device access management module has made.

9. A software-controlled product comprising a system according to any of claims 1 to 8.

10. A method of controlling access to peripheral devices of a software-controlled product, the method comprising:
- a command interception step in which a peripheral device access control module intercepts a command for a peripheral device issued by an application that is running on the software-controlled product so as to provide a centralized control of access to said peripheral devices for all applications (113) running on said software-controlled product;
- a command examination step in which a peripheral device access management module examines the command that the peripheral device access control module has intercepted so as to determine whether the application that has issued the command is authorized to present this command to the peripheral device, or not,
- an access control implementation step in which the peripheral device access control module enables presentation of the command to the peripheral device, or blocks presentation of the command to the peripheral device, depending on whether the peripheral device access management module has made a positive determination or a negative determination, respectively,
wherein the peripheral access control module (122) submits examination data (311) to the peripheral device access management module (123) following an interception of a command for a peripheral device (101), the examination data including at least one of the following information items: the application (113) that has issued the command, the peripheral device (101) for which the command is intended, at least one parameter of the command, and an application (201) that effectively seeks to use the peripheral device as at least one of the following: a source of data and a destination of data;
wherein the peripheral device access management module (123) communicates with a plug-in module (203) embedded in an application (113) adapted to issue a command for the peripheral device (101), so as to obtain contextual information (313) associated with the command for the peripheral device.

11. A device readable medium comprising a set of instructions that enables a processor, which is capable of executing the set of instructions, to carry out the method according to claim 10.

## Patentansprüche

1. System (121) zum Kontrollieren von Zugriff auf Peripheriegeräte (101-105) eines softwaregesteuerten Produkts (100), wobei das System umfasst:
- ein Peripheriegeräte-Zugriffskontrollmodul (122), das so ausgelegt ist, dass es einen Befehl für ein Peripheriegerät (101) abfängt, der von einer Anwendung (113) ausgegeben wird, die auf dem softwaregesteuerten Produkt ausgeführt wird;
- ein Peripheriegeräte-Zugriffsverwaltungsmodul (123), das so ausgelegt ist, dass es einen Befehl überprüft, den das Peripheriegeräte-Zugriffskontrollmodul abgefangen hat, um zu bestimmen, ob die Anwendung, die den Befehl ausgegeben hat, autorisiert ist, dem Peripheriegerät diesen Befehl zu präsentieren, oder nicht, um eine zentralisierte Kontrolle von Zugriff auf die Peripheriegeräte für alle Anwendungen (113) bereitzustellen, die auf dem softwaregesteuerten Produkt ausgeführt werden,
- wobei das Peripheriegeräte-Zugriffskontrollmodul so ausgelegt ist, dass es in Abhängigkeit davon, ob das Peripheriegeräte-Zugriffsverwaltungsmodul eine positive Bestimmung oder eine negative Bestimmung vorgenommen hat, Überreichung des Befehls an das Peripheriegerät ermöglicht bzw. Überreichung des Befehls an das Peripheriegerät blockiert;
wobei das Peripheriegeräte-Zugriffskontrollmodul (122) so ausgelegt ist, dass es dem Peripheriegeräte-Zugriffsverwaltungsmodul (123) nach dem Abfangen eines Befehls für ein Peripheriegerät (101) Prüfdaten (311) vorlegt, wobei die Prüfdaten mindestens eines der folgenden Informationselemente umfassen: die Anwendung (113), die den Befehl ausgeben hat, das Peripheriegerät (101), für welches der Befehl bestimmt ist, mindestens einen Parameter des Befehls und eine Anwendung (201), die tatsächlich danach strebt, das Peripheriegerät als mindestens eines von Folgenden zu verwenden: einen Ursprung von Daten und ein Ziel von Daten;
wobei das Peripheriegeräte-Zugriffsverwaltungsmodul (123) so ausgelegt ist, dass es mit einem Plug-in-Modul (203) kommuniziert, das in eine Anwendung (113) eingebettet ist, die zum Ausgeben eines Befehls für das Peripheriegerät (101) ausgelegt ist, um Kontextinformationen (313) zu erhalten, die mit dem Befehl für das Peripheriegerät assoziiert sind.

2. System nach Anspruch 1, wobei das Peripheriegeräte-Zugriffskontrollmodul (122) in ein Betriebssystem (112) des softwaregesteuerten Produkts (100) eingebettet ist.

3. System nach Anspruch 1, wobei das Peripheriegeräte-Zugriffskontrollmodul (122) zwischen dem Betriebssystem (112) des softwaregesteuerten Produkts (100) und mindestens einem Peripheriegerät (101) angeordnet ist.

4. System nach Anspruch 1, wobei die Kontextinformationen (313) eine Adressangabe einer Ressource (201) umfassen, auf welche die Anwendung (113) zugegriffen hat.

5. System nach Anspruch 4, wobei die Adressangabe mindestens eines der folgenden Informationselemente umfasst: eine URL, wobei URL ein Akronym für Uniform Resource Locator ist, eine IP-Adresse, eine Netzwerkkennung, eine Domänenidentifikation und eine Ressourcenverzeichnisidentifikation.

6. System nach einem der Ansprüche 1 bis 5, wobei das Peripheriegeräte-Zugriffsverwaltungsmodul (123) eine Konfigurationsschnittstelle (204) umfasst, die so ausgelegt ist, dass sie einen Regelsatz empfängt, gemäß dem ein Befehl für ein Peripheriegerät (101) überprüft werden sollte.

7. System nach Anspruch 6, wobei die Konfigurationsschnittstelle (204) so ausgelegt ist, dass sie den Regelsatz von einem Administrator eines Systems empfängt, das eine Mehrzahl von softwaregesteuerten Produkten umfasst.

8. System nach einem der Ansprüche 1 bis 7, wobei das Peripheriegeräte-Zugriffsverwaltungsmodul (13) eine Informationszustellungsschnittstelle (205) umfasst, die zum Bereitstellen von Informationen über Zugriffsautorisierungsbestimmungen ausgelegt ist, die das Peripheriegeräte-Zugriffsverwaltungsmodul vorgenommen hat.

9. Softwaregesteuertes Produkt, umfassend ein System nach einem Ansprüche 1 bis 8.

10. Verfahren zur Kontrolle von Zugriff auf Peripheriegeräte eines softwaregesteuerten Produkts, wobei das Verfahren umfasst:
- einen Befehlsabfangschritt, wobei das Peripheriegeräte-Zugriffskontrollmodul einen Befehl für ein Peripheriegerät abfängt, der von einer Anwendung ausgegeben wird, die auf dem softwaregesteuerten Produkt ausgeführt wird, um eine zentralisierte Kontrolle von Zugriff auf die Peripheriegeräte für alle Anwendungen (113) bereitzustellen, die auf dem softwaregesteuerten Produkt ausgeführt werden;
- einen Befehlsüberprüfungsschritt, wobei ein Peripheriegeräte-Zugriffsverwaltungsmodul den Befehl überprüft, den das Peripheriegeräte-Zugriffskontrollmodul abgefangen hat, um zu bestimmen, ob die Anwendung, die den Befehl ausgeben hat, autorisiert ist, dem Peripheriegerät diesen Befehl zu präsentieren, oder nicht,
- einen Zugriffskontrollimplementierungsschritt, wobei das Peripheriegeräte-Zugriffskontrollmodul in Abhängigkeit davon, ob das Peripheriegeräte-Zugriffsverwaltungsmodul eine positive Bestimmung oder eine negative Bestimmung vorgenommen hat, Überreichung des Befehls an das Peripheriegerät ermöglicht bzw. Überreichung des Befehls an das Peripheriegerät blockiert;
wobei das Peripheriegeräte-Zugriffskontrollmodul (122) dem Peripheriegeräte-Zugriffsverwaltungsmodul (123) nach dem Abfangen eines Befehls für ein Peripheriegerät (101) Prüfdaten (311) vorlegt, wobei die Prüfdaten mindestens eines der folgenden Informationselemente umfassen: die Anwendung (113), die den Befehl ausgeben hat, das Peripheriegerät (101), für welches der Befehl bestimmt ist, mindestens einen Parameter des Befehls und eine Anwendung (201), die tatsächlich danach strebt, das Peripheriegerät als mindestens eines von Folgenden zu verwenden: einen Ursprung von Daten und ein Ziel von Daten;
wobei das Peripheriegeräte-Zugriffsverwaltungsmodul (123) mit einem Plug-in-Modul (203) kommuniziert, das in eine Anwendung (113) eingebettet ist, die zum Ausgeben eines Befehls für das Peripheriegerät (101) ausgelegt ist, um Kontextinformationen (313) zu erhalten, die mit dem Befehl für das Peripheriegerät assoziiert sind.

11. Gerätelesbares Medium, das einen Satz von Anweisungen umfasst, der einen Prozessor, der zum Ausführen des Satzes von Anweisungen imstande ist, zum Durchführen des Verfahrens nach Anspruch 10 befähigt.

## Revendications

1. Système (121) permettant de contrôler un accès à des dispositifs périphériques (101-105) d'un produit commandé par logiciel (100), le système comprenant :
- un module de contrôle d'accès à un dispositif périphérique (122) conçu pour intercepter une commande destinée à un dispositif périphérique (101) émise par une application (113) qui s'exécute sur le produit commandé par logiciel ;
- un module de gestion d'accès à un dispositif périphérique (123) conçu pour examiner une commande que le module de contrôle d'accès à un dispositif périphérique a interceptée afin de déterminer si l'application qui a émis la commande est autorisée à présenter cette commande au dispositif périphérique, ou non, afin de fournir un contrôle centralisé d'accès auxdits dispositifs périphériques pour toutes les applications (113) s'exécutant sur ledit produit commandé par logiciel,
- le module de contrôle d'accès à un dispositif périphérique étant conçu pour permettre la présentation de la commande au dispositif périphérique, ou pour bloquer la présentation de la commande au dispositif périphérique, selon que le module de gestion d'accès à un dispositif périphérique a fait une détermination positive ou une détermination négative, respectivement ;
le module de contrôle d'accès à un dispositif périphérique (122) étant conçu pour soumettre des données d'examen (311) au module de gestion d'accès à un dispositif périphérique (123) après une interception d'une commande destinée à un dispositif périphérique (101), les données d'examen comportant au moins une des informations suivantes : l'application (113) qui a émis la commande, le dispositif périphérique (101) à qui la commande est destinée, au moins un paramètre de la commande, et une application (201) qui cherche effectivement à utiliser le dispositif périphérique comme au moins un des éléments suivants : une source de données et une destination de données ;
le module de gestion d'accès à un dispositif périphérique (123) servant à communiquer avec un module enfichable (203) incorporé dans une application (113) conçue pour émettre une commande destinée au dispositif périphérique (101), afin d'obtenir des informations contextuelles (313) associées à la commande destinée au dispositif périphérique.

2. Système selon la revendication 1, dans lequel le module de contrôle d'accès à un dispositif périphérique (122) est incorporé dans un système d'exploitation (112) du produit commandé par logiciel (100).

3. Système selon la revendication 1, dans lequel le module de contrôle d'accès à un dispositif périphérique (122) est placé entre un système d'exploitation (112) du produit commandé par logiciel (100) et au moins un dispositif périphérique (101).

4. Système selon la revendication 1, dans lequel les informations contextuelles (313) comprennent une indication d'adresse d'une ressource (201) à laquelle l'application (113) a accédé.

5. Système selon la revendication 4, dans lequel l'indication d'adresse comprend au moins une des informations suivantes : une URL, URL étant un acronyme pour localisateur uniforme de ressources, une adresse IP, un identifiant de réseau, une identification de domaine, et une identification de répertoire de ressource.

6. Système selon l'une quelconque des revendications 1 à 5, dans lequel le module de gestion d'accès à un dispositif périphérique (123) comprend une interface de configuration (204) conçue pour recevoir un ensemble de règles selon lesquelles une commande destinée à un dispositif périphérique (101) doit être examinée.

7. Système selon la revendication 6, dans lequel l'interface de configuration (204) est conçue pour recevoir l'ensemble de règles à partir d'un administrateur d'un système comprenant une pluralité de produits commandés par logiciel.

8. Système selon l'une quelconque des revendications 1 à 7, dans lequel le module de gestion d'accès à un dispositif périphérique (123) comprend une interface de livraison d'informations (205) conçue pour fournir des informations sur des déterminations d'autorisation d'accès que le module de gestion d'accès à un dispositif périphérique a faites.

9. Produit commandé par logiciel comprenant un système selon l'une quelconque des revendications 1 à 8.

10. Procédé permettant de contrôler un accès à des dispositifs périphériques d'un produit commandé par logiciel, le procédé comprenant :
- une étape d'interception de commande dans laquelle un module de contrôle d'accès à un dispositif périphérique intercepte une commande destinée à un dispositif périphérique émise par une application qui s'exécute sur le produit commandé par logiciel afin de fournir un contrôle centralisé d'accès auxdits dispositifs périphériques pour toutes les applications (113) s'exécutant sur ledit produit commandé par logiciel ;
- une étape d'examen de commande dans laquelle un module de gestion d'accès à un dispositif périphérique examine la commande que le module de contrôle d'accès à un dispositif périphérique a interceptée afin de déterminer si l'application qui a émis la commande est autorisée à présenter cette commande au dispositif périphérique, ou non,
- une étape de mise en œuvre de contrôle d'accès dans laquelle le module de contrôle d'accès à un dispositif périphérique permet la présentation de la commande au dispositif périphérique, ou bloque la présentation de la commande au dispositif périphérique, selon que le module de gestion d'accès à un dispositif périphérique a fait une détermination positive ou une détermination négative, respectivement ;
le module de contrôle d'accès à un dispositif périphérique (122) soumettant des données d'examen (311) au module de gestion d'accès à un dispositif périphérique (123) après une interception d'une commande destinée à un dispositif périphérique (101), les données d'examen comportant au moins une des informations suivantes : l'application (113) qui a émis la commande, le dispositif périphérique (101) à qui la commande est destinée, au moins un paramètre de la commande, et une application (201) qui cherche effectivement à utiliser le dispositif périphérique comme au moins un des éléments suivants : une source de données et une destination de données ;
le module de gestion d'accès à un dispositif périphérique (123) communiquant avec un module enfichable (203) incorporé dans une application (113) conçue pour émettre une commande destinée au dispositif périphérique (101), afin d'obtenir des informations contextuelles (313) associées à la commande destinée au dispositif périphérique.

11. Support lisible par un dispositif comprenant une série d'instructions qui permettent à un processeur, qui est capable d'exécuter la série d'instructions, de mettre en œuvre le procédé selon la revendication 10.
